# EUROPEAN PATENT APPLICATION

(11) **EP 4 310 018 A1**
(43) Date of publication of application: **24.01.2024**
(21) Application number: 22833181.5
(22) Date of filing: 28.06.2022
(51) Int. Cl.: B65D 65/40, B65D 5/40, B65D 5/74

(54) **PACKAGING MATERIAL AND CONTAINER**

(30) Priority: 30.06.2021 JP 2021108677
(71) Applicant: TOPPAN INC., Tokyo 110-0016 (JP)
(72) Inventor: IMAIZUMI, Shukiko, Tokyo 110-0016 (JP)
(74) Representative: TBK
(86) International application number: PCT/JP2022/025821
(87) International publication number: WO 2023/277035

(57) **Abstract**

A packaging material according to the present discourse includes a laminated structure that includes a paper base material, an adhesive resin layer, a gas barrier layer, and a sealant layer in this order, wherein the adhesive resin layer contains an ionomer resin containing at least one of zinc ions and sodium ions and a polymer compound.

## Description

### Technical Field

The present disclosure relates to a packaging material and a container.

### Background Art

Conventionally, in the field of packaging materials, liquid paper containers mainly made of paper have been used. Patent Literature 1 discloses a liquid paper container formed of a packaging material including a paper base material, a specific barrier layer (a gas barrier layer), an adhesive resin layer with a specific thickness and a heat-sealable resin layer (a sealant layer).

### Citation List

### Patent Literature

[Patent Literature 1] Japanese Unexamined Patent Publication No. 2001-171649

### Summary of Invention

### Technical Problem

Such a container (a paper container) generally includes a container main body having a top portion, side surfaces and a bottom portion made of a packaging material. For example, when the container main body has a rectangular tube shape, the container can be obtained by forming ruled lines on a packaging material in advance, bending the packaging material along the ruled lines and heating and adhering the packaging material. In addition, when the container main body has a cylindrical shape, the container can be obtained by heating separate members constituting a top portion, a side surface, and a bottom portion, respectively, and then adhering them together. Additionally, such members can be obtained by bending the packaging material while the packaging material is heated to obtain a desired shape.

Since the container main body is formed by bending the packaging material as described above, there is a problem that cracks and pinholes are likely to occur in a bent portion and gas barrier properties are likely to be deteriorated.

Also, the packaging material is obtained by heating and laminating the materials constituting the packaging material, but water in the paper which is the main material may evaporate to generate water vapor due to heating. The generated water vapor may penetrate into an interface between the paper and the adhesive resin layer and may form voids, which is a so-called foaming phenomenon. When voids are formed due to the foaming phenomenon, and the packaging material is subsequently heated, heat during heating is less likely to be transferred to the paper in portions in which the voids are formed. As a result, excessive heat is accumulated in the gas barrier layer, cracks and pinholes are generated, and gas barrier properties are lowered.

Further, when the container main body has a cylindrical shape, the member is obtained by bending the packaging material while heating, and thus the heat causes the foaming phenomenon, which makes cracks and pinholes more likely to occur.

The present disclosure provides a packaging material from which a container having excellent gas barrier properties can be obtained, and a container obtained using the packaging material.

### Solution to Problem

A packaging material according to an aspect of the present disclosure includes a laminated structure including a paper base material, an adhesive resin layer, a gas barrier layer, and a sealant layer in this order, wherein the adhesive resin layer contains an ionomer resin containing at least one of zinc ions and sodium ions and a polymer compound.

According to the packaging material according to the present disclosure, a container with excellent gas barrier properties can be obtained. Such an effect is presumed to be produced by the following mechanism. That is, since the ionomer resin contained in the adhesive resin layer has a low melting point, the lamination of the materials constituting the packaging material and the bending of the packaging material can be performed at a low temperature. Therefore, a foaming phenomenon caused by heating can be curbed. In addition, the ionomer resin is extremely excellent in toughness and elasticity due to a cross-linked structure thereof, even among resins having a low melting point. Furthermore, since the metal ions of the ionomer resin are at least one of zinc ions and sodium ions, the ionomer resin does not become too hard and exhibits good fluidity, compared to magnesium ions, aluminum ions, or the like. Therefore, when the adhesive resin layer contains the ionomer resin, the obtained container has excellent gas barrier properties.

The gas barrier layer may have a film base material and a deposition layer because the container is excellent in water resistance and recyclability, the film base material may include a polypropylene film, and the deposition layer may contain an inorganic oxide. Since the deposition layer is more excellent in gas barrier properties, it may be disposed between the film base material and the adhesive resin layer. Since the sealant layer is more excellent in gas barrier properties of the container, the ionomer resin containing at least one of zinc ions and sodium ions and a polymer compound may be contained.

The resin contained in the adhesive resin layer may have a tensile breaking stress of 20 to 40 MPa at 23°C and also may have a tensile breaking strain of 250 to 550% at 23°C, because the container is more excellent in gas barrier properties. From the same viewpoint, the resin contained in the adhesive resin layer may have a durometer hardness of 60 to 80 according to a type D durometer at 23°C.

A container according to another aspect of the present disclosure is made of the packaging material. This container maintains excellent gas barrier properties even when tension is applied or bending is performed in a manufacturing process (a box-forming process).

### Advantageous Effects of Invention

According to the present disclosure, a packaging material capable of obtaining a container having excellent gas barrier properties, and a container obtained using the same are provided.

### Brief Description of Drawings

FIG. 1 is a cross-sectional view schematically showing one embodiment of a packaging material according to the present disclosure.
FIG. 2 is a cross-sectional view schematically showing another embodiment of the packaging material according to the present disclosure.
FIG. 3 is a perspective view schematically showing one embodiment of a container according to the present disclosure.
FIG. 4 is a perspective view schematically showing another embodiment of the container according to the present disclosure.

### Description of Embodiments

Hereinafter, embodiments of the present disclosure will be described with reference to the drawings. The present disclosure is not limited to the following embodiments.

### [Packaging material]

### <First embodiment>

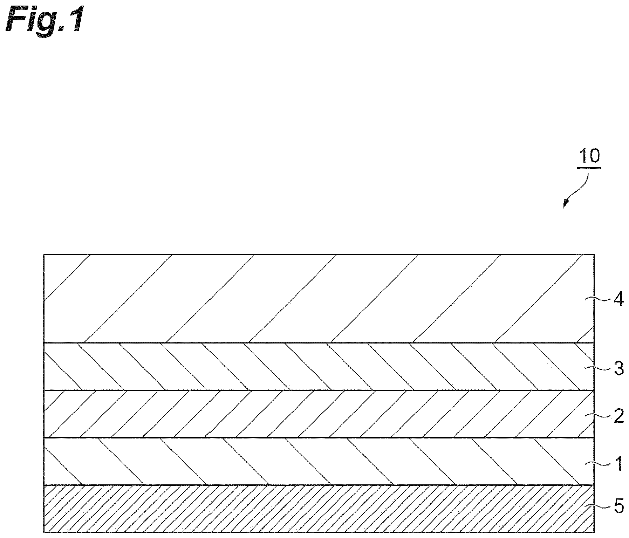

A packaging material according to a first embodiment will be described below. FIG. 1 is a cross-sectional view schematically showing a packaging material according to a first embodiment. As shown in FIG. 1, the packaging material 10 according to this embodiment has a laminated structure including a paper base material 1, an adhesive resin layer 2, a gas barrier layer 3, and a sealant layer 4 in this order. A protective layer 5 is disposed on a surface of the paper base material 1 opposite to a surface in contact with the adhesive resin layer 2. Each configuration of the packaging material 10 will be described below.

### (Paper base material)

As the paper base material 1, for example, paper having shapeability, bending resistance, rigidity, stiffness, strength, and the like can be used. As such paper, for example, strong sizing bleached or unbleached paper, pure white roll paper, kraft paper, cardboard and processed paper can be used.

A basis weight of the paper base material 1 is preferably 80 to 600 g/m² and more preferably 200 to 450 g/m², because an obtained container has better gas barrier properties.

Desired printed patterns such as characters, figures, patterns and symbols can be arbitrarily formed on the paper base material 1 by a normal printing method.

### (Adhesive resin layer)

The adhesive resin layer 2 contains an ionomer resin containing metal ions selected from at least one of zinc ions and sodium ions, and a polymer compound (hereinafter, referred to simply as an "ionomer resin"). The ionomer resin is a resin in which a polymer compound is aggregated by the metal ions.

A tensile breaking stress of the ionomer resin according to this embodiment at 23°C is such that the packaging material has sufficient elongation and elasticity, and is preferably from 20 to 40 MPa and more preferably from 30 to 40 MPa, because the gas barrier properties of the obtained container are further improved. The tensile breaking stress is measured according to JIS K7161-1:2014 K7161-2:2014.

A tensile breaking strain of the ionomer resin at 23°C indicates that the packaging material has sufficient elongation and elasticity, and is preferably from 250 to 550%, more preferably from 300 to 500%, and even more preferably from 350 to 450%, because the gas barrier properties of the obtained container are more excellent. The tensile breaking strain is measured according to JIS K7161-1:2014 K7161-2:2014.

A durometer hardness of the ionomer resin by a type D durometer at 23°C indicates that the packaging material has sufficient elongation and elasticity, and is preferably 60 to 80 because the gas barrier properties of the resulting container are more excellent. The durometer hardness is measured according to JIS K7215:1986.

The polymer compound contained in the ionomer resin includes, for example, an itaconic acid copolymer, a maleic anhydride copolymer, and an ethylene-methacrylic acid copolymer. The polymer compound is preferably an ethylene-methacrylic acid copolymer because it has excellent compatibility and fluidity, and the obtained container has even more excellent gas barrier properties. Further, when the polymer compound is an ethylene-methacrylic acid copolymer, since the gas barrier layer 3 is a polypropylene film as will be described below, it is made of the same olefin-based resin. Therefore, the packaging material 10 is improved in recyclability.

A thickness of the adhesive resin layer 2 is preferably 1 to 40 µm, more preferably 10 to 40 µm, and even more preferably 15 to 25 µm, because an obtained container has more excellent gas barrier properties.

The adhesive resin layer 2 may further contain a resin other than the ionomer resin. Such a resin include, for example, low density polyethylene, linear low density polyethylene, polypropylene, and copolymers of polyethylene and polyvinyl acetate.

When the adhesive resin layer 2 contains a resin other than the ionomer resin, the tensile breaking stress, the tensile breaking strain and the durometer hardness are values for a resin composition as a whole including such a resin.

When the adhesive resin layer 2 contains a resin other than the ionomer resin, the content of the ionomer resin in the adhesive resin layer 2 may be 80% by mass or more, 90% by mass or more, or 95% by mass or more based on the total amount of the adhesive resin layer.

### (Gas barrier layer)

The gas barrier layer 3 is a polypropylene film. A thickness of the gas barrier layer 3 is preferably 15 to 30 µm, and more preferably 18 to 20 µm from the viewpoint of ease of processing such as laminating processing. Materials other than the polypropylene film can be used for the gas barrier layer 3. Such materials include, for example, a polyethylene film, a polyethylene terephthalate film and a nylon film. Moreover, the film material used as the gas barrier layer 3 may be a monoaxially stretched film or a biaxially stretched film.

### (Sealant layer)

The sealant layer 4 contains an ionomer resin. The ionomer resin contained in the sealant layer 4 may be the same as or different from the ionomer resin contained in the adhesive resin layer 2.

A method and a preferable numerical range for measuring the tensile breaking stress, the tensile breaking strain, and the durometer hardness by the type D durometer of the ionomer resin contained in the sealant layer 4 are the same as those of the ionomer resin contained in the adhesive resin layer 2.

The thickness of the sealant layer 4 is preferably from 30 to 150 µm, and more preferably from 50 to 80 µm, because the obtained container has more excellent gas barrier properties.

The material of the sealant layer 4 is not limited to ionomer resin. Such a material include, for example, low density polyethylene, linear low density polyethylene, polypropylene, and copolymers of polyethylene and polyvinyl acetate. The materials for the sealant layer 4 may be used singly or in combination of two or more. When the material of the sealant layer 4 is a resin other than the ionomer resin, the tensile breaking stress, the tensile breaking strain and the durometer hardness of the resin may be similar to those of the ionomer resin. When the sealant layer 4 contains two or more resins as a composition, the tensile breaking stress, the tensile breaking strain and the durometer hardness are values for the resin composition as a whole.

When the sealant layer 4 contains a resin other than the ionomer resin, the content of the ionomer resin in the sealant layer 4 may be 80% by mass or more, 90% by mass or more, or 95% by mass or more based on the total amount of the sealant layer.

### (Protective layer)

A material of the protective layer 5 may be a polyethylene resin, for example. When the protective layer 5 is made of a polyethylene resin, the obtained container has excellent recyclability. The polyethylene resin is preferably medium-density polyethylene and high-density polyethylene, because it has high physical strength and the obtained container has even more excellent gas barrier properties. A thickness of the protective layer 5 is preferably from 10 to 30 µm, and more preferably from 15 to 20 µm, because the obtained container has more excellent gas barrier properties. The packaging material 10 may not have the protective layer 5.

The packaging material 10 is obtained by laminating each of the layers. A method for laminating each of the layers includes, for example, an extrusion lamination method, a T-die extrusion method, a co-extrusion lamination method, an inflation method, and a co-extrusion inflation method. A major surface of each of the layers may be subjected to, for example, corona treatment, plasma treatment and ozone treatment prior to the lamination.

According to the packaging material 10 configured as described above, the following effects are achieved. That is, since the ionomer resin contained in the adhesive resin layer 2 has a low melting point, the lamination of the materials constituting the packaging material and the box formation of the packaging material can be performed at a low temperature. Therefore, the foaming phenomenon caused by heating can be curbed.

Moreover, when the gas barrier layer is a polypropylene film, the rigidity of the packaging material is higher than when it is a polyethylene terephthalate film. Thus, a larger force is applied to the bent portion of the packaging material. In addition, the polypropylene film is inferior to the polyethylene terephthalate film in heat resistance, and thus shrinks greatly due to heat during lamination. Therefore, when the gas barrier layer is a polypropylene film, cracks and pinholes are likely to occur. However, the ionomer resin has a low melting point and is extremely excellent in toughness and elasticity due to a cross-linked structure thereof, and thus, even when the gas barrier layer 3 is a polypropylene film, the obtained container has excellent gas barrier properties. Moreover, since the gas barrier layer 3 is a polypropylene film, the obtained container is excellent in recyclability.

Moreover, since the sealant layer 4 contains an ionomer resin, the bonding of the packaging material 10 can be performed at a low temperature. That is, sealing during box making can be performed at a low temperature. The foaming phenomenon is suppressed by bonding at a low temperature. As a result, the resulting container has excellent gas barrier properties. In addition, since the ionomer resin has the characteristic of being able to obtain hot tack in a wide heat sealing temperature range from low to high temperatures, the packaging material 10 tends to be excellent in terms of foreign matter bite sealing properties and the like.

### <Second embodiment>

A packaging material according to a second embodiment will be described below. Points not described below are the same as those of the packaging material according to the first embodiment, unless inconsistency occurs.

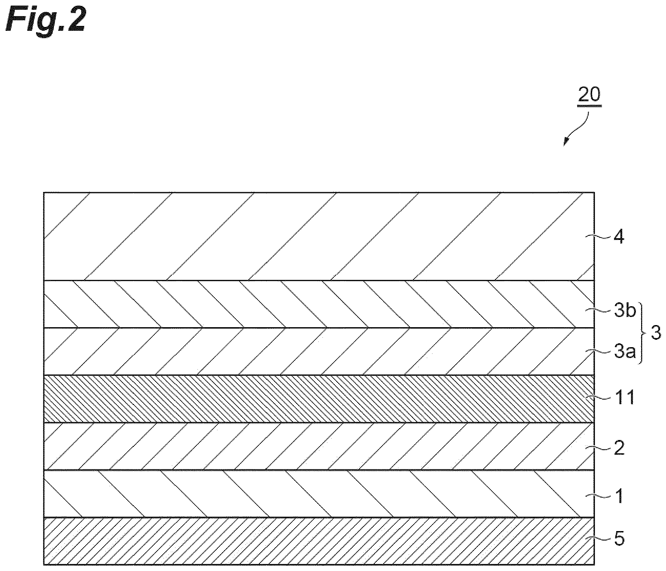

FIG. 2 is a cross-sectional view schematically showing the packaging material according to the second embodiment. As shown in FIG. 2, the packaging material 20 according to this embodiment has a laminated structure including a gas barrier layer 3 configured of a protective layer 5, a paper base material 1, an adhesive resin layer 2, a primer layer 11, a deposition layer 3a and a film base material 3b, and a sealant layer 4 in this order.

In the packaging material 20, the deposition layer 3a is disposed between the film base material 3b and the adhesive resin layer 2. Since the deposition layer 3a which is the hardest among the three layers is disposed between the film base material 3b and the adhesive resin layer 2, bending of the packaging material 20 tends to be curbed. Therefore, the obtained packaging material 20 has even better gas barrier properties. In addition, in the packaging material 20, the laminating order of the film base material 3b and the deposition layer 3a may be changed.

### (Deposition layer)

The deposition layer 3a is a layer deposited with silicon oxide (SiOₓ). Therefore, the packaging material 20 has excellent water resistance. A thickness of the deposition layer 3a may be appropriately set according to intended use, and is preferably 1 to 300 nm, more preferably 10 to 300 nm, and still more preferably 30 to 100 nm. When the thickness of the deposition layer 3a is set to 1 nm or more, the continuity of the deposition layer 3a can be easily made sufficient, and when it is set to 300 nm or less, occurrence of curling and cracking can be sufficiently curbed, and thus it is easy to achieve sufficient gas barrier performance and flexibility.

The deposition layer 3a may be a layer deposited with an inorganic compound or a metal other than silicon oxide (SiOₓ). The deposition layer may be obtained by, for example, depositing aluminum, or may contain aluminum oxide (AlOₓ).

From the viewpoint of oxygen gas barrier performance and film uniformity, the deposition layer 3a is preferably formed by a vacuum film formation means. The film formation means include known methods such as a vacuum deposition method, a sputtering method, and a chemical vapor deposition method (CVD method), but the vacuum deposition method is preferred because of high film formation speed and high productivity thereof. In the vacuum deposition methods, in particular, a film formation means using electron beam heating is effective because film formation speed can be easily controlled by an irradiation area, an electron beam current, and the like, and heating and cooling of a deposition material can be performed in a short time.

### (Film base material)

The film base material 3b is a polypropylene film. A thickness and a material of the film base material 3b may be the same as those of the gas barrier layer 3 in the packaging material 10 according to the above embodiment.

### (Primer layer)

The primer layer 11 improves adhesion between the adhesive resin layer 2 and the deposition layer 3a. Materials for the primer layer 11 include, for example, anchor coating agents and lamination adhesives. Examples of the anchor coating agents include isocyanate-based resins, urethane-based resins, polyethyleneimine-based resins, polybutadiene-based resins, and organic titanium compounds. Examples of the lamination adhesives include polyurethane resins, polyacrylic resins, polyester-based resins, epoxy-based resins, polyvinyl acetate-based resins, and cellulose-based resins.

The primer layer 11 is formed through a process of applying a coating liquid onto a surface of the deposition layer 3a. As a coating method, conventionally known methods such as a casting method, a dipping method, a roll coating method, a gravure coating method, a screen printing method, a reverse coating method, a spray coating method, a kit coating method, a die coating method, a metering bar coating method, a chamber doctor combined coating method, and a curtain coating method which are commonly used can be used. The primer layer 11 is formed by heating and drying a coating film formed by applying a coating liquid. A thickness of the primer layer 11 is, for example, approximately 0.01 to 10 µm.

### [Container]

### <First embodiment>

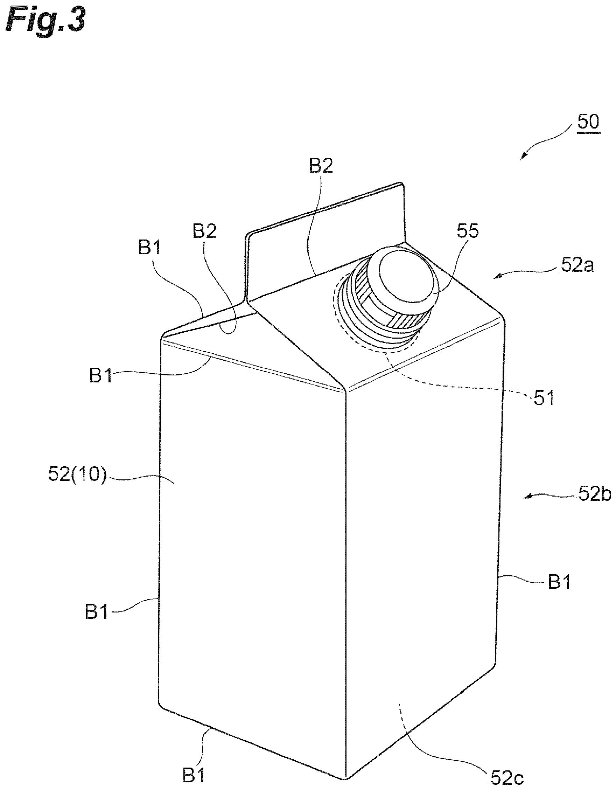

A container (a paper container) according to a first embodiment will be described below. A container 50 shown in FIG. 3 is manufactured using the packaging material 10. The container 50 may be made using the packaging material 20.

For example, the container 50 can fill and package various foods and drinks, chemicals such as adhesives and pressure-sensitive adhesives, cosmetics, sundries such as medicines, and various other articles. Since the container 50 has excellent gas barrier properties, it is particularly suitably used as a packaging container for filling and packaging alcoholic beverages, milk, juices such as fruit juice beverages, mineral water, liquid seasonings such as soy sauce and sauces, and liquid foods and beverages such as curry, stew and soup.

The container 50 is a gable top type container. The container 50 includes a rectangular tubular container main body 52 having an upper portion 52a having an opening 51, a side surface 52b and a bottom portion 52c, and a cap 55 closing the opening 51. The container main body 52 has the protective layer 5 of the packaging material 10 as the outermost layer and the sealant layer 4 as the innermost layer. The container main body 52 has portions (folded portions B1 and B2) in which the packaging material 10 is folded. The folded portion B1 is a portion in which the packaging material 10 is valley-folded when seen from the innermost layer side, while the folded portion B2 is a portion in which the packaging material 10 is mountain-folded when seen from the innermost layer side.

The container 50 is configured of the packaging material 10 that can maintain sufficient gas barrier properties even after tension is applied. Therefore, deterioration of the contents can be sufficiently curbed for a long period of time.

### <Second embodiment>

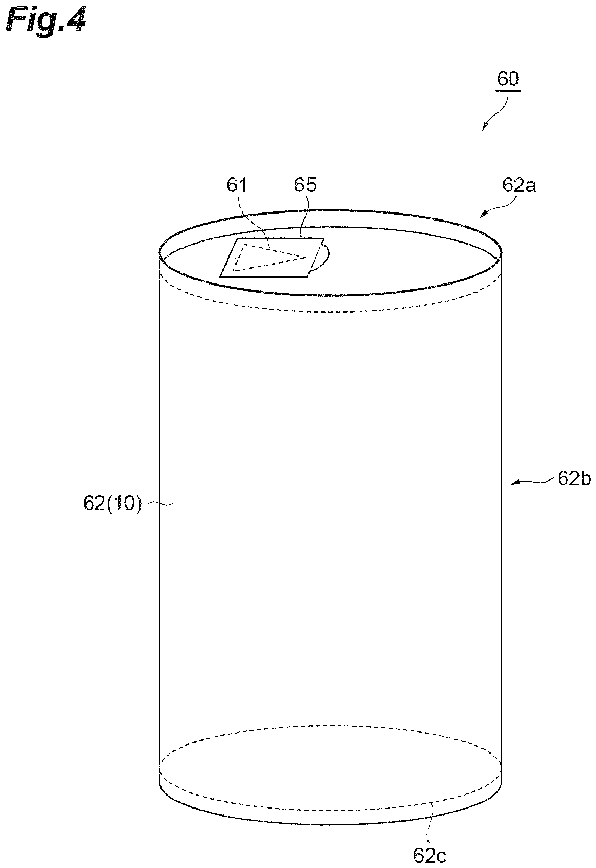

A container (a paper container) according to a second embodiment will be described. Points not described below are the same as those of the container according to the first embodiment unless inconsistency occurs. A container 60 shown in FIG. 4 is manufactured using the packaging material 10. The container 60 may be manufactured using the packaging material 20.

The container 60 includes a cylindrical container main body 62 having an upper portion 62a having an opening 61, a side surface 62b and a bottom portion 62c, and a seal portion 65 closing the opening 61. The container main body 62 has the protective layer 5 of the packaging material 10 as the outermost layer and the sealant layer 4 as the innermost layer. The side surface 62b is configured of the packaging material 10 that is bent while being heated.

The packaging material 10 can be bent at a low temperature, and can maintain sufficient gas barrier properties even after tension is applied by bending. Therefore, deterioration of the contents can be sufficiently curbed for a long period of time.

Although the embodiments of the present disclosure have been described above in detail, the present disclosure is not limited to the above embodiments. For example, the packaging material 20 may not include the primer layer 11. Further, although the container 50 has the opening 51 in the upper portion 52a, the opening 51 may not be provided. Moreover, the shape of the container is not limited to the shapes of the containers 50 and 60, and may be, for example, a brick type or a triangular pyramid shape.

### [Examples]

The present disclosure will be described in more detail below based on examples and comparative example, but the present disclosure is not limited to the following examples.

The following materials were prepared for the adhesive resin layer and the sealant layer.
· Ionomer resin A: Himilan 1652 (trade name, ionomer resin in which an ethylene-methacrylic acid copolymer is aggregated by zinc ions, manufactured by Dow-Mitsui Polychemicals Co., Ltd., tensile breaking stress: 24 MPa, tensile breaking strain: 500%, durometer hardness: 58)
· Ionomer resin B: Himilan 1605 (trade name, ionomer resin in which an ethylene-methacrylic acid copolymer is aggregated by sodium ions, manufactured by Dow-Mitsui Polychemicals Co., Ltd., tensile breaking stress: 35 MPa, tensile breaking strain: 400%, durometer hardness: 65)
· Low-density polyethylene resin: LC600A (trade name, manufactured by Japan Polyethylene Corporation)

The tensile breaking stress and the tensile breaking strain of the ionomer resin are values measured at 23°C according to JIS K7161-1:2014 K7161-2:2014. The durometer hardness of the ionomer resin is a value measured at 23°C according to JIS K7215:1986.

### [Manufacture of packaging materials and containers]

### (Example 1)

A packaging material according to this example was obtained through the following steps. That is, a gas barrier film was prepared by forming a deposition layer (a silica deposition layer, thickness: 50 nm) containing silica as a main component on one surface of a film base material (material: polypropylene resin, thickness: 18 µm). A sealant layer (material: ionomer resin A, thickness: 30 µm) was formed on the other surface of the film substrate to obtain a laminate 1 including a deposition layer. On the other hand, a protective layer (material: polyethylene, thickness: 20 µm) was formed on one surface of a paper base material (basis weight: 260 g/m²) to obtain a laminate 2 containing the paper base material. The laminates 1 and 2 were adhered together with the ionomer resin A (the adhesive resin layer) by extrusion lamination so that the deposition layer of the laminate 1 and the paper base material of the laminate 2 faced each other. A thickness of the adhesive resin layer was 15 µm. A temperature during the extrusion lamination was a value shown in Table 1.

The obtained packaging material was formed into a gable top type container. A temperature at the time of heat-sealing was the value shown in Table 1.

### (Example 2)

A packaging material and a container were manufactured in the same manner as in Example 1, except that the ionomer resin B was used instead of the ionomer resin A as the sealant layer and the adhesive resin layer.

### (Example 3)

A packaging material and a container were manufactured in the same manner as in Example 1, except that a low-density polyethylene resin was used as the sealant layer instead of the ionomer resin A.

### (Comparative example 1)

A packaging material and a container were manufactured in the same manner as in Example 1, except that a low-density polyethylene resin was used instead of the ionomer resin A as the sealant layer and the adhesive resin layer.

### [Measurement of the number of pinholes]

### (Examples 1 to 3 and comparative example 1)

The obtained packaging material was cut into a size of 295 mm long×210 mm wide to obtain an evaluation sample. This sample was mounted in a fixed head of a gelbo flex tester (trade name: BE-1005) manufactured by Tester Sangyo Co., Ltd. so as to form a cylindrical shape with a diameter of 87.5 mm×210 mm. The sample was mounted in the fixed head with the protective layer on the outside of the cylinder. Both ends of the sample was held, the initial gripping distance was 175 mm at room temperature (23°C), a twist of 440 degrees was applied with a stroke of 63 mm, and this motion was repeated 5, 10 or 50 times at a speed of 40 times/min to bend the sample. After the sample is bent, red ink was applied to one surface of the sample on white paper, and the number of pinholes was confirmed by visually counting the number of ink that oozed out from a surface opposite to the surface on which the red ink was applied. Table 1 shows the results.

### [Measurement of oxygen permeability]

### (Examples 1 to 3 and comparative example 1)

Measurement was performed under the conditions of a temperature of 30°C and a relative humidity of 70% using an oxygen permeability measuring device (manufactured by Mocon Co., trade name: "OX-TRAN 2/22"). The measurement was performed on the container immediately after box forming. Table 1 shows the results. The measured value was expressed as [(cc/pkg·day)].

**[Table 1]**

| | Lamination temperature(°C) | Sealing temperature (°C) | The number of pinholes | | | Oxygen permeability(cc/pkg·day) |
|---|---|---|---|---|---|---|
| | | | The number of bending | | | |
| | | | 5 times | 10 times | 50 times | |
| Example 1 | 280 | 240 | 2 | 4 | 23 | 0.5 |
| Example 2 | 270 | 220 | 1 | 3 | 18 | 0.4 |
| Example 3 | 320 | 300 | 6 | 23 | 76 | 2.9 |
| Comparative example 1 | 340 | 330 | 13 | 36 | 93 | 3.5 |

From each of the examples and comparative example, it can be understood that the number of pinholes and the oxygen permeability are reduced when the adhesive resin layer contains a specific ionomer resin (Examples 1 to 3). Moreover, it can be understood that, when both the adhesive resin layer and the sealant layer contain a specific ionomer resin (Examples 1 and 2), heat sealing at a temperature as low as 60°C or more is possible, the number of pinholes is further reduced, and the oxygen permeability is further reduced (about one digit), compared to a case in which only the adhesive resin layer contains a specific ionomer resin (Example 3).

The gist of the present disclosure resides in the following [1] to [7].
[1] A packaging material including:
   a laminated structure including a paper base material, an adhesive resin layer, a gas barrier layer, and a sealant layer in this order, wherein
   the adhesive resin layer contains an ionomer resin containing at least one of zinc ions and sodium ions and a polymer compound.
[2] The packaging material according to [1], wherein the gas barrier layer has a film base material and a deposition layer,
   the film base material includes a polypropylene film, and
   the deposition layer contains an inorganic oxide.
[3] The packaging material according to [2], wherein the deposition layer is disposed between the film base material and the adhesive resin layer.
[4] The packaging material according to [1] or [2], wherein the sealant layer contains an ionomer resin containing at least one of zinc ions and sodium ions and a polymer compound.
[5] The packaging material according to [1] or [2], wherein a resin contained in the adhesive resin layer has a tensile breaking stress of 20 to 40 MPa at 23°C and a tensile breaking strain of 250 to 550% at 23°C.
[6] The packaging material according to [1] or [2], wherein a resin contained in the adhesive resin layer has a durometer hardness of 60 to 80 according to a type D durometer at 23°C.
[7] A container made of the packaging material according to [1] or [2].

### Reference Signs List

1 Paper base material
2 Adhesive resin layer
3 Gas barrier layer
4 Sealant layer
5 Protective layer
11 Primer layer
10, 20 Packaging material
50, 60 Container

## Claims

1. A packaging material comprising:
a laminated structure comprising a paper base material, an adhesive resin layer, a gas barrier layer, and a sealant layer in this order, wherein
the adhesive resin layer contains an ionomer resin containing at least one of zinc ions and sodium ions and a polymer compound.

2. The packaging material according to claim 1, wherein the gas barrier layer has a film base material and a deposition layer,
the film base material includes a polypropylene film, and
the deposition layer contains an inorganic oxide.

3. The packaging material according to claim 2, wherein the deposition layer is disposed between the film base material and the adhesive resin layer.

4. The packaging material according to any one of claims 1 to 3, wherein the sealant layer contains an ionomer resin containing at least one of zinc ions and sodium ions and a polymer compound.

5. The packaging material according to any one of claims 1 to 4, wherein a resin contained in the adhesive resin layer has a tensile breaking stress of 20 to 40 MPa at 23°C and a tensile breaking strain of 250 to 550% at 23°C.

6. The packaging material according to any one of claims 1 to 5, wherein a resin contained in the adhesive resin layer has a durometer hardness of 60 to 80 according to a type D durometer at 23°C.

7. A container made of the packaging material according to any one of claims 1 to 6.
